# EUROPEAN PATENT APPLICATION

(11) **EP 4 789 529 A2**
(43) Date of publication of application: **12.08.2026**
(21) Application number: 24910681.6
(22) Date of filing: 10.12.2024
(51) Int. Cl.: A01D 43/063, A01D 69/02, A01D 67/00, E01H 5/00

(54) **MANNED LAWN MOWER, AND OUTDOOR TRAVELING APPARATUS**

(30) Priority: 26.12.2023 CN 202311817442; 29.11.2024 CN 202411745368
(71) Applicant: Nanjing Chervon Industry Co., Ltd., Nanjing, Jiangsu 211106 (CN)
(72) Inventor: LI, Yang, Nanjing, Jiangsu 211106 (CN); CHEN, Yicong, Nanjing, Jiangsu 211106 (CN)
(74) Representative: Sun, Yiming
(86) International application number: PCT/CN2024/137999
(87) International publication number: WO 2025/139750

(57) **Abstract**

Provided are a manned mower and an outdoor traveling device. The manned mower includes: a frame; a traveling wheel set mounted to the frame, where the traveling wheel set includes at least rear traveling wheels that include a first traveling wheel and a second traveling wheel; a traveling motor having a drive shaft and configured to drive the traveling wheel set; a mowing element driven by a mowing motor; and a power supply assembly, where the power supply assembly includes at least one battery pack and is configured to power the traveling motor and/or the mowing motor. A ratio of a distance L1 between the first traveling wheel and the second traveling wheel to a radius R of the first traveling wheel is greater than or equal to 6.

## Description

This application claims priority to Chinese Patent Application No. 202311817442.0 filed with the China National Intellectual Property Administration (CNIPA) on Dec. 26, 2023 and Chinese Patent Application No. 202411745368.0 filed with the CNIPA on Nov. 29, 2024, the disclosures of which are incorporated herein by reference in their entireties.

### TECHNICAL FIELD

The present application relates to an electric device, for example, a manned mower and an outdoor traveling device.

### BACKGROUND

Outdoor traveling devices in the related art are configured to work outdoors, for example, a manned snow thrower, a manned mower, and an all-terrain vehicle. When the manned mower works, problems such as a high phase current during a turn on a flat ground and a limited extreme slope-traveling capability may arise.

This part provides background information related to the present application, and the background information is not necessarily the existing art.

### SUMMARY

An object of the present application is to solve or at least alleviate part or all of the preceding problems. To this end, an object of the present application is to provide a manned mower and an outdoor traveling device. This manned mower requires a lower torque from an electric motor during turning work and slope work, experiences slower temperature rise, and has stronger endurance.

To achieve the preceding object, the present application adopts the technical solutions described below. A manned mower includes: a frame; a traveling wheel set mounted to the frame, where the traveling wheel set includes at least rear traveling wheels, and the rear traveling wheels include a first traveling wheel and a second traveling wheel; a traveling motor having a drive shaft and configured to drive the traveling wheel set; a mowing element driven by a mowing motor; and a power supply assembly, where the power supply assembly includes at least one battery pack and is configured to power the traveling motor and/or the mowing motor. A ratio of a distance L1 between the first traveling wheel and the second traveling wheel to a radius R of the first traveling wheel is greater than or equal to 6.

In some examples, the distance L1 between the first traveling wheel and the second traveling wheel is greater than or equal to 1200 mm.

In some examples, the distance L1 between the first traveling wheel and the second traveling wheel is greater than or equal to 1250 mm.

In some examples, the radius R of the first traveling wheel is less than or equal to 200 mm.

In some examples, each of the radius R of the first traveling wheel and a radius R of the second traveling wheel is less than or equal to 180 mm.

In some examples, a total energy of the power supply assembly is greater than or equal to 2 kW·h and less than or equal to 10 kW·h.

In some examples, a distance L2 from a midpoint of a line connecting an axis center of the first traveling wheel and an axis center of the second traveling wheel to a center of gravity of the manned mower is less than or equal to 200 mm.

In some examples, during travel on a slope with a gradient of greater than or equal to 10° and less than or equal to 20°, a maximum torque required for the first traveling wheel and/or the second traveling wheel to travel is less than or equal to 70 N·m.

In some examples, the at least one battery pack is detachably mounted on the frame.

In some examples, the traveling motor includes at least a first traveling motor and a second traveling motor, the first traveling motor is configured to drive the first traveling wheel, and the second traveling motor is configured to drive the second traveling wheel.

In some examples, the manned mower is a riding mower or a stand-on mower.

In some examples, an energy of the at least one battery pack of the power supply assembly is greater than or equal to 100 W·h and less than or equal to 2 kW·h.

The present application further discloses a technical solution. A manned mower includes: a frame; a traveling wheel set mounted to the frame, where the traveling wheel set includes at least rear traveling wheels, and the rear traveling wheels include a first traveling wheel and a second traveling wheel; a traveling motor having a drive shaft and configured to drive the traveling wheel set; a mowing element driven by a mowing motor; and a power supply assembly, where the power supply assembly includes at least one battery pack and is configured to power the traveling motor and/or the mowing motor. A distance L1 between the first traveling wheel and the second traveling wheel is greater than or equal to 1200 mm.

In some examples, the distance L1 between the first traveling wheel and the second traveling wheel is greater than or equal to 1250 mm.

In some examples, each of a radius R of the first traveling wheel and a radius R of the second traveling wheel is less than or equal to 200 mm.

The present application further discloses a technical solution. An outdoor traveling device includes: a frame; a traveling wheel set mounted to the frame, where the traveling wheel set includes at least rear traveling wheels, and the rear traveling wheels include a first traveling wheel and a second traveling wheel; a traveling motor having a drive shaft and configured to drive the traveling wheel set; a mowing element driven by a mowing motor; and a power supply assembly, where the power supply assembly includes at least one battery pack and is configured to power the traveling motor and/or the mowing motor. A ratio of a distance L1 between the first traveling wheel and the second traveling wheel to a radius R of the first traveling wheel is greater than or equal to 6.

In some examples, the outdoor traveling device is a manned snow thrower, a manned mower, or an all-terrain vehicle.

### BRIEF DESCRIPTION OF DRAWINGS

FIG. 1 is a structural view of a manned mower according to an example of the present application.
FIG. 2 is a structural view of the manned mower in FIG. 1 from another viewing angle.
FIG. 3 is a top view of the manned mower in FIG. 1.
FIG. 4 is a plan view of a manned mower according to an example of the present application.
FIG. 5 is a graph showing a correlation between a wheel radius and a maximum torque required to drive a first traveling wheel under a first working condition.
FIG. 6 is a graph showing a correlation between a wheel radius and a maximum torque required to drive a second traveling wheel under a first working condition.
FIG. 7 is a graph showing a correlation between a track width and a maximum torque required to drive a first traveling wheel under a first working condition.
FIG. 8 is a graph showing a correlation between a track width and a maximum torque required to drive a second traveling wheel under a first working condition.
FIG. 9 is a graph showing a correlation between an eccentric distance and a maximum torque required to drive a first traveling wheel under a first working condition.
FIG. 10 is a graph showing a correlation between an eccentric distance and a maximum torque required to drive a second traveling wheel under a first working condition.
FIG. 11 is a graph showing a correlation between an overall vehicle weight and a maximum torque required to drive a first traveling wheel under a first working condition.
FIG. 12 is a graph showing a correlation between an overall vehicle weight and a maximum torque required to drive a second traveling wheel under a first working condition.
FIG. 13 is a graph showing sensitivity relationships between a maximum torque required to drive a first traveling wheel under a first working condition and a wheel radius, a track width, an eccentric distance, and an overall vehicle weight.
FIG. 14 is a graph showing sensitivity relationships between a maximum torque required to drive a second traveling wheel under a first working condition and a wheel radius, a track width, an eccentric distance, and an overall vehicle weight.
FIG. 15 is a graph showing a correlation between a wheel radius and a maximum torque required to drive a first traveling wheel under a second working condition.
FIG. 16 is a graph showing a correlation between a wheel radius and a maximum torque required to drive a second traveling wheel under a second working condition.
FIG. 17 is a graph showing a correlation between a track width and a maximum torque required to drive a first traveling wheel under a second working condition.
FIG. 18 is a graph showing a correlation between a track width and a maximum torque required to drive a second traveling wheel under a second working condition.
FIG. 19 is a graph showing a correlation between an eccentric distance and a maximum torque required to drive a first traveling wheel under a second working condition.
FIG. 20 is a graph showing a correlation between an eccentric distance and a maximum torque required to drive a second traveling wheel under a second working condition.
FIG. 21 is a graph showing a correlation between an overall vehicle weight and a maximum torque required to drive a first traveling wheel under a second working condition.
FIG. 22 is a graph showing a correlation between an overall vehicle weight and a maximum torque required to drive a second traveling wheel under a second working condition.
FIG. 23 is a graph showing sensitivity relationships between a maximum torque required to drive a first traveling wheel under a second working condition and a wheel radius, a track width, an eccentric distance, and an overall vehicle weight.
FIG. 24 is a graph showing sensitivity relationships between a maximum torque required to drive a second traveling wheel under a second working condition and a wheel radius, a track width, an eccentric distance, and an overall vehicle weight.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

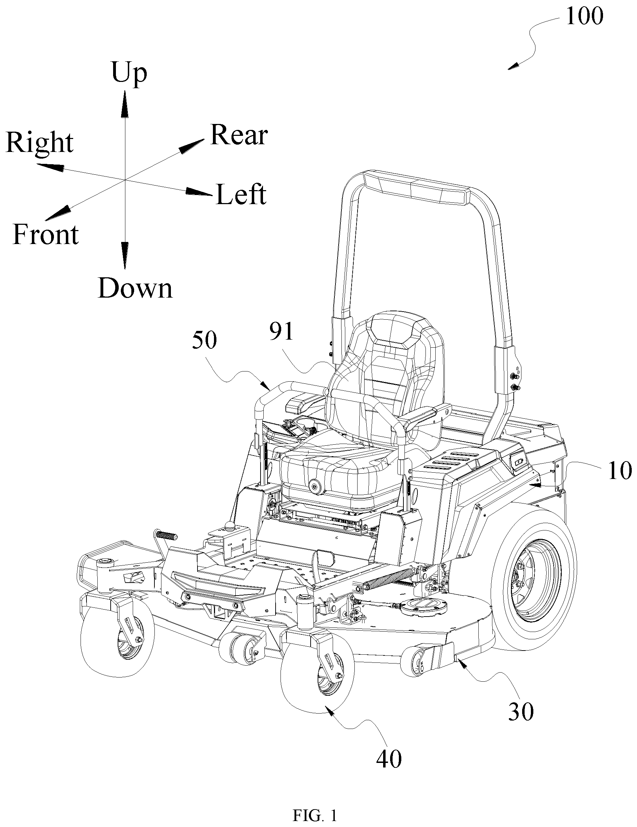

As shown in FIG. 1, an outdoor traveling device 100 disclosed in the present application may specifically be an electric wheeled device, such as a manned mower. A user may ride or stand on the manned mower to operate the manned mower to trim lawns and other vegetation. In the specification, front, rear, left, right, up, and down are described as directions shown in FIG. 1. Specifically, when the user rides on the outdoor traveling device 100 on the ground, it is defined that a direction which the user faces is front, a direction which the user faces away from is rear, a direction on a left-hand side of the user is left, a direction on a right-hand side of the user is right, a direction toward the ground is down, and a direction away from the ground is up. Of course, the outdoor traveling device disclosed in the present application further includes a utility vehicle (UTV). In the related art, the UTV includes a four-wheel all-terrain vehicle (ATV), a multi-purpose ATV, and a go-kart. In addition, the outdoor traveling device disclosed in the present application further includes a manned snow thrower, a push mower, a push snow thrower, a UTV, and an electric motorcycle.

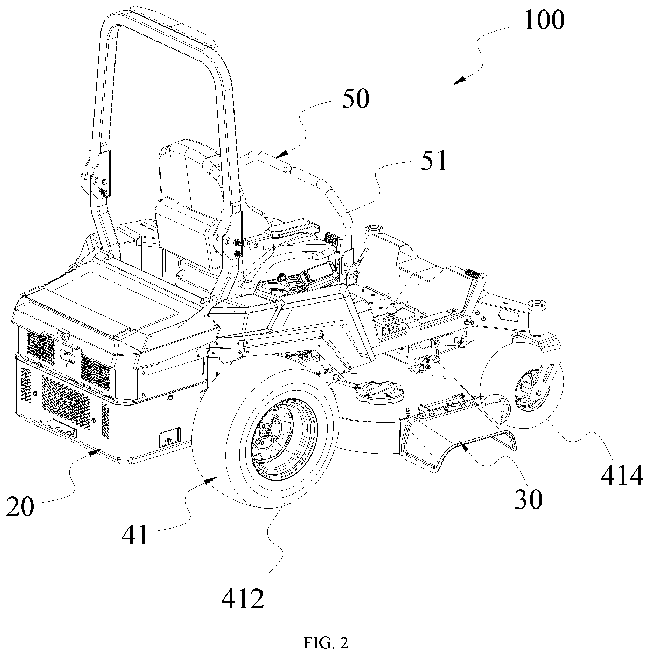

As shown in FIGS. 1 to 3, the outdoor traveling device 100 includes a housing assembly 10, a power supply assembly 20, and a traveling assembly 40. The traveling assembly 40 includes a traveling wheel set 41 and a traveling motor 42. The traveling motor 42 has a drive shaft and is configured to drive the traveling wheel set 41 to rotate. The power supply assembly 20 is configured to power the outdoor traveling device 100. Specifically, the power supply assembly 20 powers the traveling motor 42.

The power supply assembly 20 includes a battery pack and a connector for mounting the battery pack to connect the battery pack to the outdoor traveling device 100. The battery pack is detachably connected to the connector, and the connector is detachably mounted to the outdoor traveling device 100 so that the battery pack can be removed to be adapted to another powered device. Other powered devices include, but are not limited to, a UTV, a push mower, a push snow thrower, and a manned mower. Specifically, the power supply assembly 20 of the outdoor traveling device 100 is detachably removed from the outdoor traveling device 100 and then mounted to a UTV, a push mower, a push snow thrower, a riding mower, and a stand-on mower to power the preceding powered devices to implement a function of the preceding power supply device.

In some examples, the battery pack disclosed in the present application may include a lithium iron phosphate cell. In some examples, the battery pack may be a supercapacitor, also referred to as an electrochemical capacitor.

With continued reference to FIGS. 1 to 3, when the outdoor traveling device is specifically the manned mower 100, the manned mower 100 includes the housing assembly 10, the power supply assembly 20, a mowing assembly 30, the traveling assembly 40, an operation assembly 50, a frame 11, and a support portion. The frame 11 extends substantially along a front and rear direction. The frame 11 and the housing assembly 10 form a body of the manned mower 100 for mounting the power supply assembly 20, the mowing assembly 30, the traveling assembly 40, and the support portion. The traveling assembly 40 is configured to support the body. The operation assembly 50 includes an operation rod assembly 51. The operation rod assembly 51 is operated by the user to control the manned mower to move forward, move backward, and turn. In some examples, the operation assembly 50 may further include a steering wheel assembly. The support portion is mounted on the frame 11 and configured to support an operator. Optionally, the support portion includes a seat 91. The seat 91 is mounted on the frame 11 and is configured to be ridden by the user. Optionally, the support portion further includes a platform for the user to stand on. The power supply assembly 20 is configured to supply energy to the mowing assembly 30, the traveling assembly 40, and the like so that the manned mower 100 can be used as a power tool capable of carrying a person. The electric manned mower is more environmentally friendly and more energy-efficient than a fuel-based manned mower. In some examples, the manned mowing device 100 further includes a grass collecting apparatus. The grass collecting apparatus is configured to collect grass clippings cut by the mowing assembly 30. The grass collecting apparatus includes a grass collecting basket assembly detachably mounted behind the seat 91.

In some examples, the traveling assembly 40 includes the traveling wheel set 41 and the traveling motor 42. The traveling motor 42 has the drive shaft and is configured to drive the traveling wheel set 41 to rotate. The traveling wheel set 41 is connected to the body to support the body. The traveling wheel set 41 can at least drive the manned mower 100 to travel along the front and rear direction. Optionally, the traveling wheel set 41 includes rear traveling wheels, and the rear traveling wheels include a first traveling wheel 411 and a second traveling wheel 412. In this example, the first traveling wheel 411 is a left rear wheel, and the second traveling wheel 412 is a right rear wheel. In other examples, the first traveling wheel 411 is the right rear wheel, and the second traveling wheel 412 is the left rear wheel, which is not specifically limited here. Optionally, the traveling wheel set 41 further includes a third traveling wheel 413 and a fourth traveling wheel 414. Each of the third traveling wheel 413 and the fourth traveling wheel 414 is a front wheel. In this example, the third traveling wheel 413 is a left front wheel, and the fourth traveling wheel 414 is a right front wheel. In other examples, the third traveling wheel 413 is the left rear wheel, and the fourth traveling wheel 414 is the right rear wheel, which is not specifically limited here.

The traveling motor 42 drives the traveling wheel set 41 to rotate and is configured to implement a traveling function of the manned mower 100. Optionally, one, two, three, or four traveling motors 42 may be provided. In this example, two traveling motors 42 are provided, and the two traveling motors 42 drive the first traveling wheel 411 and the second traveling wheel 412, respectively. Thus, the manned mower 100 can turn in other directions deviating from the front and rear direction.

The power supply assembly 20 is configured to power at least the traveling motor 42. The power supply assembly 20 includes at least one battery pack. In some examples, the power supply assembly 20 includes 3, 4, 5, 6, 7, 8, or more battery packs. In some examples, the at least one battery pack of the power supply assembly 20 is detachably mounted to manned mower 100. An energy of the at least one battery pack of the power supply assembly 20 is greater than or equal to 100 W·h and less than or equal to 2 kW·h. In some examples, the power supply assembly 20 includes at least one battery pack with a large capacity. An energy of the battery pack is greater than or equal to 1 kW·h and less than or equal to 30 kW·h.

In the present application, the manned mower 100 is used as an example. In fact, manned mowers include but are not limited to a stand-on mower and a riding mower.

Manned mowers, especially zero roll-over radius (ZTR) mowers, can make an in-situ turn and work efficiently. However, the manned mowers are off-road vehicles, which work in complex environments and are often used in complex working environments such as slopes and depressions. Therefore, when the manned mowers work, problems such as a high phase current during a turn on a flat ground and a limited extreme slope-traveling capability may arise.

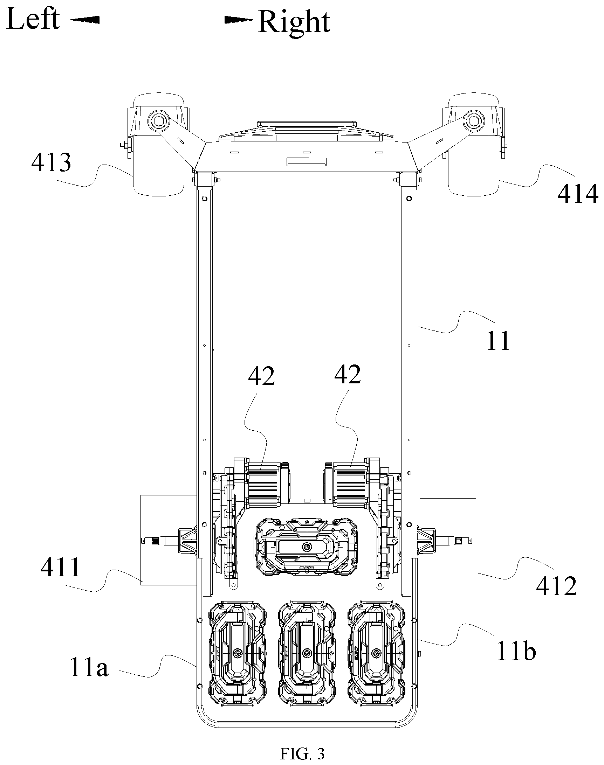

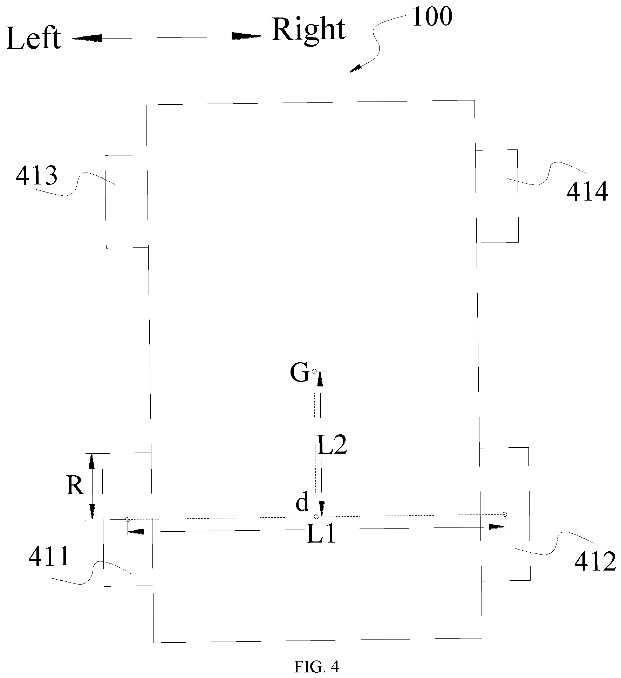

In the manned mower disclosed in the present application, as shown in FIGS. 3 and 4, a ratio of a distance L1 between the first traveling wheel 411 and the second traveling wheel 412 to a radius R of the first traveling wheel 411 is greater than or equal to 6. The distance L1 between the first traveling wheel 411 and the second traveling wheel 412 refers to a distance between an axis of the first traveling wheel 411 and an axis of the second traveling wheel 412. The radius R of the first traveling wheel 411 refers to the radius of the first traveling wheel 411 including a tire.

Through analysis, it is found that the distance L1 between the first traveling wheel 411 and the second traveling wheel 412 and the radius R of the first traveling wheel 411 each have an effect on maximum torques required for the traveling motor 42 to drive the first traveling wheel 411 and the second traveling wheel 412 to travel. At the same target wheel speeds, the ratio of the distance L1 between the first traveling wheel 411 and the second traveling wheel 412 to the radius R of the first traveling wheel 411 is greater than or equal to 6 so that the maximum torques required for the traveling motor 42 to drive the first traveling wheel 411 and the second traveling wheel 412 to travel are significantly lower than those of a conventional manned mower. The reduction of the torques can extend battery lifetime, reduce temperature rise, and improve extreme working capabilities. Therefore, the manned mower is adaptable to working conditions with steeper gradients and has better working capabilities under extreme working conditions of slope slipping.

The following describes a specific process of discovering that the distance L1 between the first traveling wheel 411 and the second traveling wheel 412 and the radius R of the first traveling wheel 411 each have an effect on the maximum torques required for the traveling motor 42 to drive the first traveling wheel 411 and the second traveling wheel 412 to travel. First, a dynamic model of the manned mower is established. Then, the dynamic model is calibrated. Finally, linear relationships between the maximum torques required to drive the first traveling wheel 411 and the second traveling wheel 412 to travel and different parameters under different working conditions and at the same target wheel speeds are obtained.

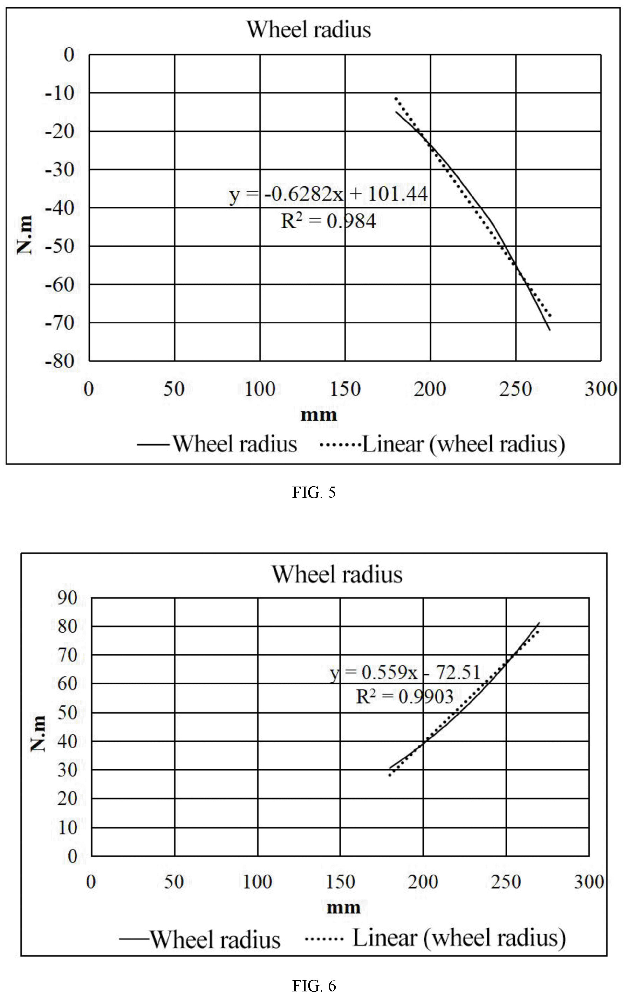

For example, a first working condition refers to a left-turn working condition of the manned mower. Specifically, the user uses an operation member to cause the first traveling wheel 411 to rotate forward at half of a maximum allowable rotational speed and cause the second traveling wheel 412 to rotate forward at a maximum allowable rotational speed. FIG. 5 is a graph showing a correlation between the wheel radius and a maximum torque required to drive the first traveling wheel 411 under the first working condition. FIG. 6 is a graph showing a correlation between the wheel radius and a maximum torque required to drive the second traveling wheel 412 under the first working condition. Each of dashed lines in FIGS. 5 and 6 represents a linear fitting relationship between the wheel radius and the maximum torque. The wheel radius in FIGS. 5 and 6 refers to the radius R of the first traveling wheel 411. It can be seen from FIGS. 5 and 6 that under the first working condition, linear correlations exist between the radius R and the maximum torques required to drive the first traveling wheel 411 and the second traveling wheel 412 to travel at the same target wheel speeds.

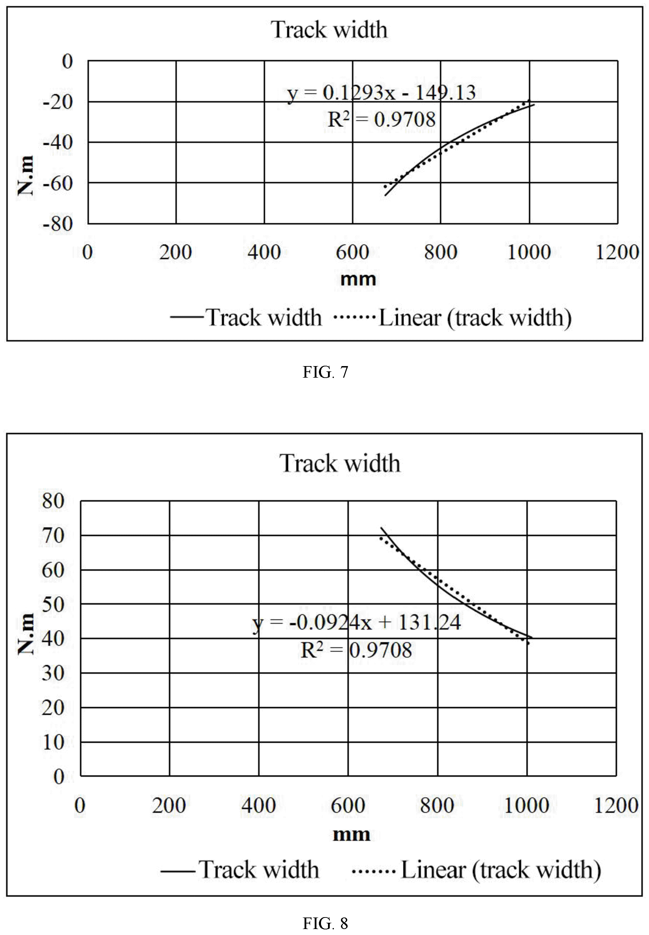

FIG. 7 is a graph showing a correlation between a track width and the maximum torque required to drive the first traveling wheel 411 under the first working condition. FIG. 8 is a graph showing a correlation between the track width and the maximum torque required to drive the second traveling wheel 412 under the first working condition. Each of dashed lines in FIGS. 7 and 8 represents a linear fitting relationship between the track width and the maximum torque. The track width in FIGS. 7 and 8 refers to the distance L1 between the first traveling wheel 411 and the second traveling wheel 412. It can be seen from FIGS. 7 and 8 that under the first working condition, linear correlations exist between the distance L1 between the first traveling wheel 411 and the second traveling wheel 412 and the maximum torques required to drive the first traveling wheel 411 and the second traveling wheel 412 to travel at the same target wheel speeds.

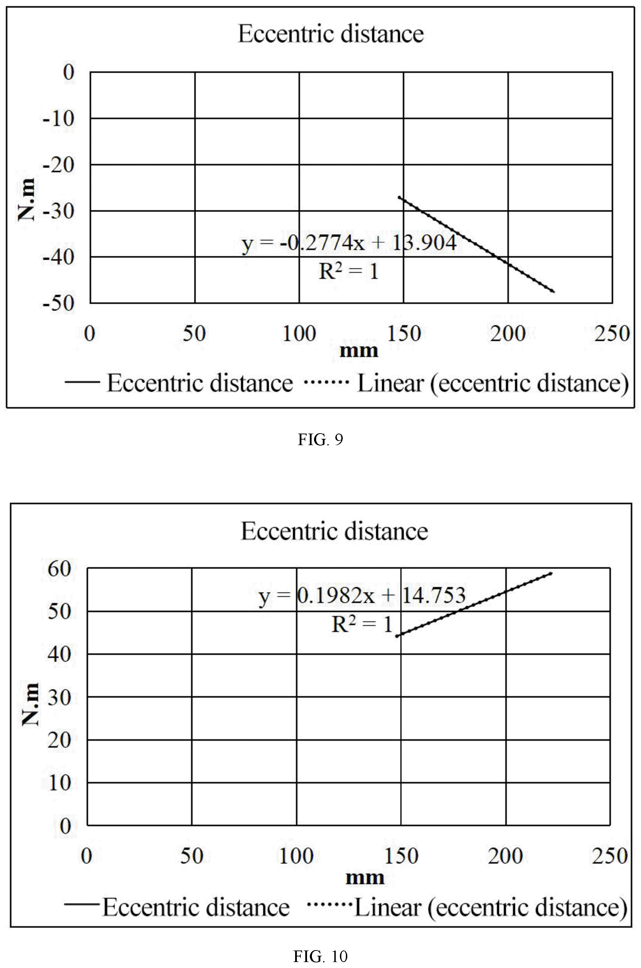

FIG. 9 is a graph showing a correlation between an eccentric distance and the maximum torque required to drive the first traveling wheel 411 under the first working condition. FIG. 10 is a graph showing a correlation between the eccentric distance and the maximum torque required to drive the second traveling wheel 412 under the first working condition. Each of solid lines in FIGS. 9 and 10 represents a relationship between the eccentric distance and the maximum torque. Each of dashed lines in FIGS. 9 and 10 represents a linear fitting relationship between the eccentric distance and the maximum torque. Two lines in each of FIGS. 9 and 10 coincide with each other, which indicates that the eccentric distance and the maximum torque are linearly correlated completely. The eccentric distance in FIG. 9 and FIG. 10 refers to a distance L2 from a midpoint d of a line connecting the axis center of the first traveling wheel 411 and the axis of the second traveling wheel 412 to a center of gravity G of the manned mower. It can be seen from FIGS. 9 and 10 that under the first working condition, linear correlations exist between the distance L2 from the midpoint d of the line connecting the axis center of the first traveling wheel 411 and the axis of the second traveling wheel 412 to the center of gravity G of the manned mower and the maximum torques required to drive the first traveling wheel 411 and the second traveling wheel 412 to travel at the same target wheel speeds.

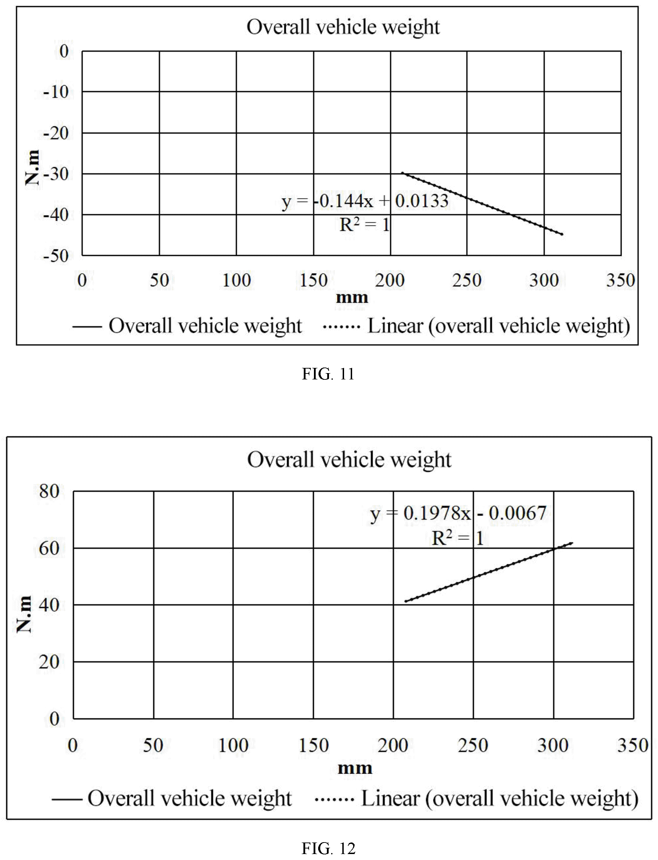

FIG. 11 is a graph showing a correlation between an overall vehicle weight and the maximum torque required to drive the first traveling wheel 411 under the first working condition. FIG. 12 is a graph showing a correlation between the overall vehicle weight and the maximum torque required to drive the second traveling wheel 412 under the first working condition. Each of solid lines in FIGS. 11 and 12 represents a relationship between the overall vehicle weight and the maximum torque. Each of dashed lines in FIGS. 11 and 12 represents a linear fitting relationship between the overall vehicle weight and the maximum torque. The overall vehicle weight refers to the total weight of the manned mower. Two lines in each of FIGS. 11 and 12 coincide with each other, which indicates that the overall vehicle weight and the maximum torque are linearly correlated completely. It can be seen from FIGS. 11 and 12 that under the first working condition, linear correlations exist between the overall vehicle weight and the maximum torques required to drive the first traveling wheel 411 and the second traveling wheel 412 to travel at the same target wheel speeds.

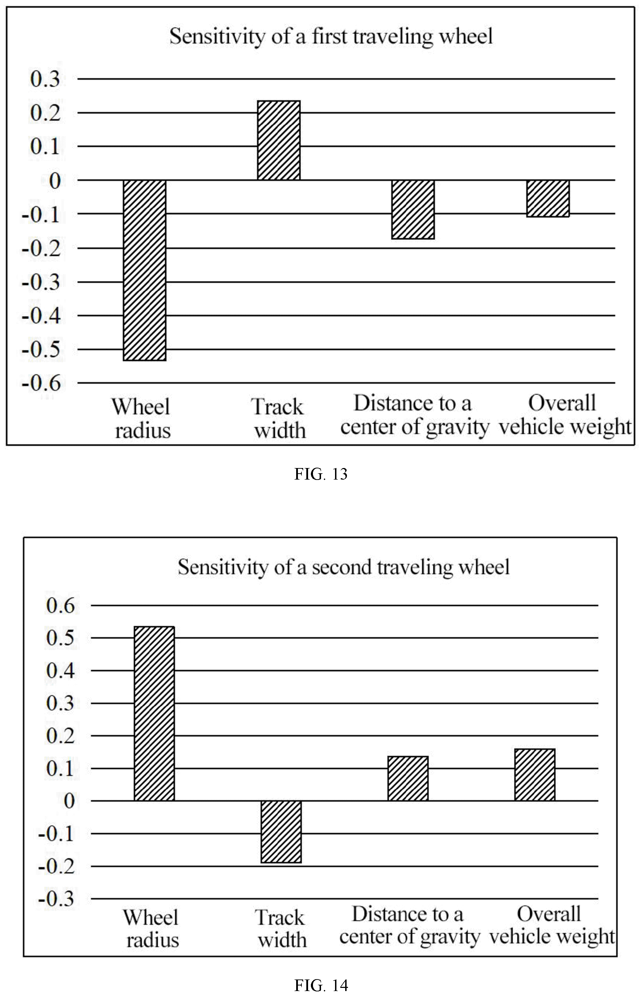

FIG. 13 is a graph showing sensitivity relationships between the maximum torque required to drive the first traveling wheel 411 under the first working condition and the wheel radius, the track width, the eccentric distance, and the overall vehicle weight. FIG. 14 is a graph showing sensitivity relationships between the maximum torque required to drive the second traveling wheel 412 under the first working condition and the wheel radius, the track width, the eccentric distance, and the overall vehicle weight. Sensitivity refers to a variation in the maximum torque caused by one unit of variation in an independent variable. The independent variable includes the wheel radius, the track width, the eccentric distance, and the overall vehicle weight. As can be seen from FIGS. 13 and 14, the wheel radius, the track width, the eccentric distance, and the overall vehicle weight all have an effect on the maximum torques. That is, under the first working condition, L1, R, L2, and the overall vehicle weight all affect the maximum torques required for the traveling motor 42 to drive the first traveling wheel 411 and the second traveling wheel 412 to travel. Moreover, L1 and R have a relatively great effect on the maximum torques required for the traveling motor 42 to drive the first traveling wheel 411 and the second traveling wheel 412 to travel, and L1 has the greatest effect on the maximum torques required for the traveling motor 42 to drive the first traveling wheel 411 and the second traveling wheel 412 to travel.

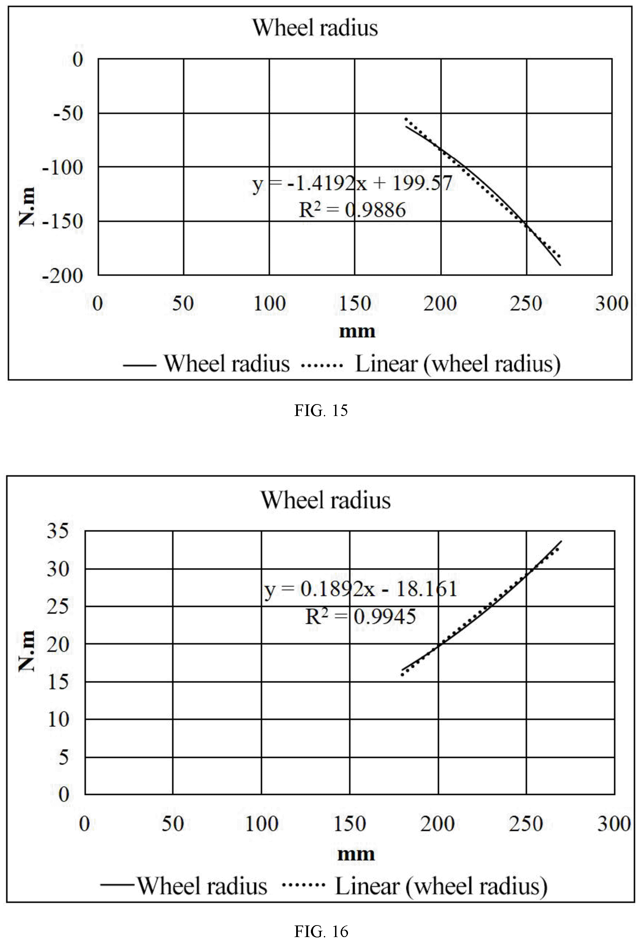

For example, a second working condition refers to a left-turn working condition of the manned mower. The user uses the operation member to cause the first traveling wheel 411 to rotate rearward at the maximum allowable speed and cause the second traveling wheel 412 to rotate forward at the maximum allowable speed. FIG. 15 is a graph showing a correlation between the wheel radius and a maximum torque required to drive the first traveling wheel 411 under the second working condition. FIG. 16 is a graph showing a correlation between the wheel radius and a maximum torque required to drive the second traveling wheel 412 under the second working condition. Each of dashed lines in FIGS. 15 and 16 represents a linear fitting relationship between the wheel radius and the maximum torque. The wheel radius in FIGS. 15 and 16 refers to the radius R of the first traveling wheel 411. It can be seen from FIGS. 15 and 16 that under the second working condition, linear correlations exist between the radius R and maximum torques.

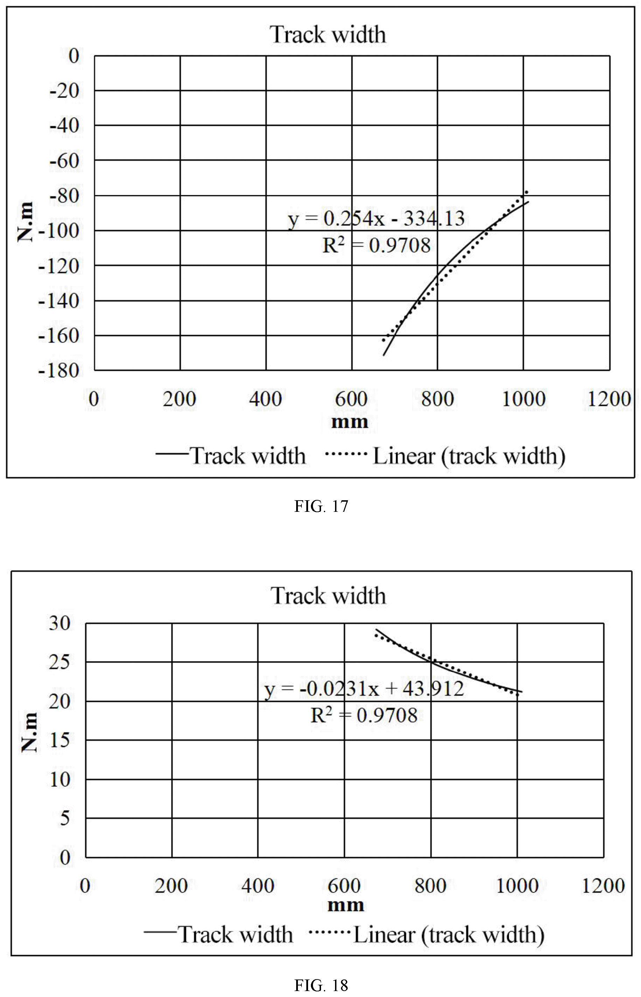

FIG. 17 is a graph showing a correlation between the track width and the maximum torque required to drive the first traveling wheel 411 under the second working condition. FIG. 18 is a graph showing a correlation between the track width and the maximum torque required to drive the second traveling wheel 412 under the second working condition. Each of dashed lines in FIGS. 17 and 18 represents a linear fitting relationship between the track width and the maximum torque. The track width in FIGS. 17 and 18 refers to the distance L1 between the first traveling wheel 411 and the second traveling wheel 412. It can be seen from FIGS. 17 and 18 that under the second working condition, linear correlations exist between the distance L1 between the first traveling wheel 411 and the second traveling wheel 412 and the maximum torques.

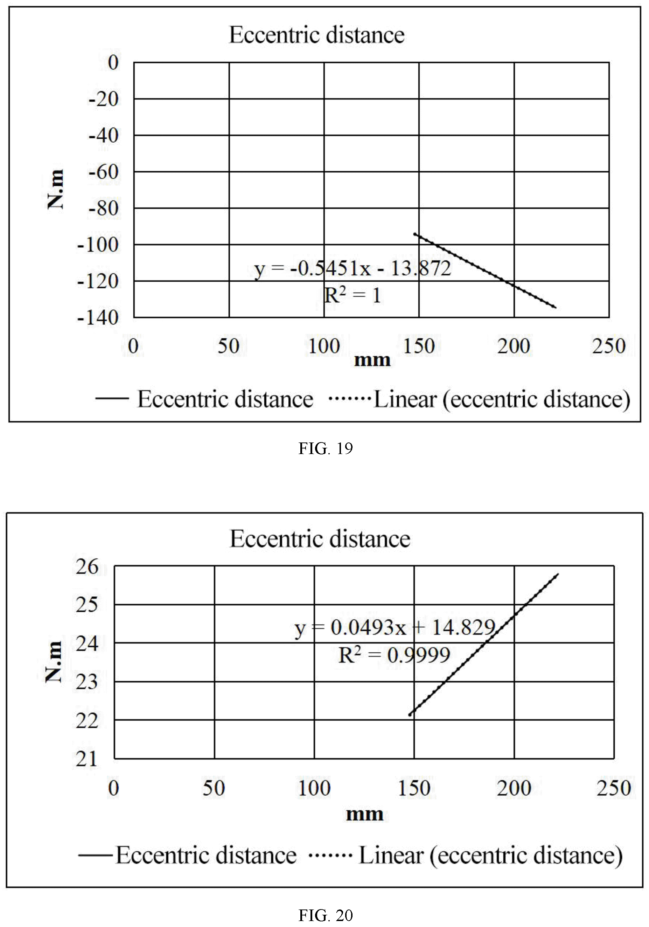

FIG. 19 is a graph showing a correlation between the eccentric distance and the maximum torque required to drive the first traveling wheel 411 under the second working condition. FIG. 20 is a graph showing a correlation between the eccentric distance and the maximum torque required to drive the second traveling wheel 412 under the second working condition. Each of dashed lines in FIGS. 19 and 20 represents a linear fitting relationship between the eccentric distance and the maximum torque. Each of solid lines in FIGS. 19 and 20 represents a relationship between the eccentric distance and the maximum torque. Two lines in each of FIGS. 19 and 20 coincide with each other, which indicates that the eccentric distance and the maximum torque are linearly correlated completely. The eccentric distance in FIG. 19 and FIG. 20 refers to the distance L2 from the midpoint d of the line connecting the axis center of the first traveling wheel 411 and the axis center of the second traveling wheel 412 to the center of gravity G of the manned mower. It can be seen from FIGS. 19 and 20 that under the second working condition, linear correlations exist between the distance L2 from the midpoint d of the line connecting the axis center of the first traveling wheel 411 and the axis center of the second traveling wheel 412 to the center of gravity G of the manned mower and the maximum torques.

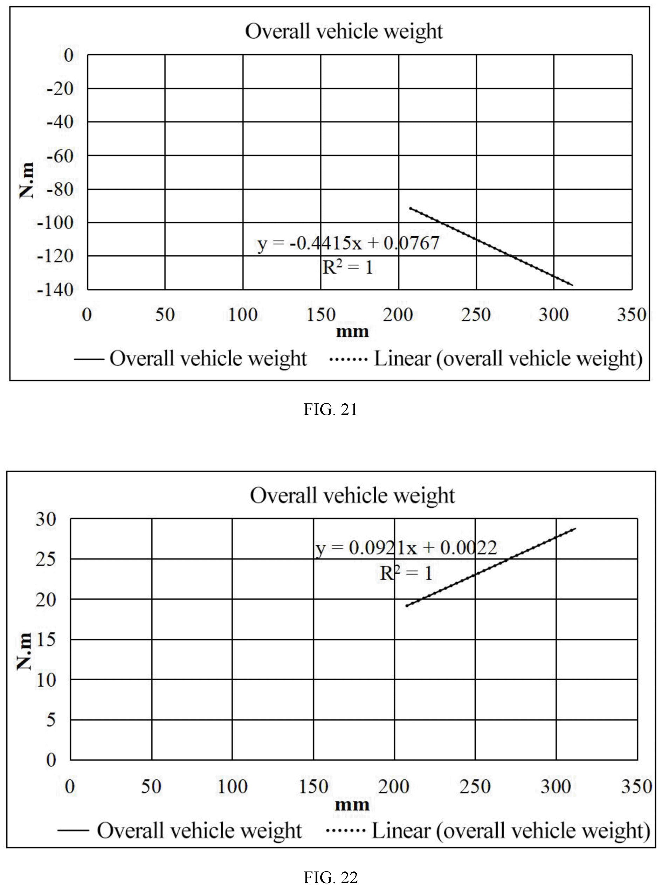

FIG. 21 is a graph showing a correlation between the overall vehicle weight and the maximum torque required to drive the first traveling wheel 411 under the second working condition. FIG. 22 is a graph showing a correlation between the overall vehicle weight and the maximum torque required to drive the second traveling wheel 412 under the second working condition. Each of dashed lines in FIGS. 21 and 22 represents a linear fitting relationship between the overall vehicle weight and the maximum torque. Each of solid lines in FIGS. 21 and 22 represents a relationship between the overall vehicle weight and the maximum torque. Two lines in each of FIGS. 21 and 22 coincide with each other, which indicates that the overall vehicle weight and the maximum torque are linearly correlated completely. The overall vehicle weight refers to the total weight of the manned mower. It can be seen from FIGS. 21 and 22 that under the second working condition, linear correlations exist between the overall vehicle weight and the maximum torques.

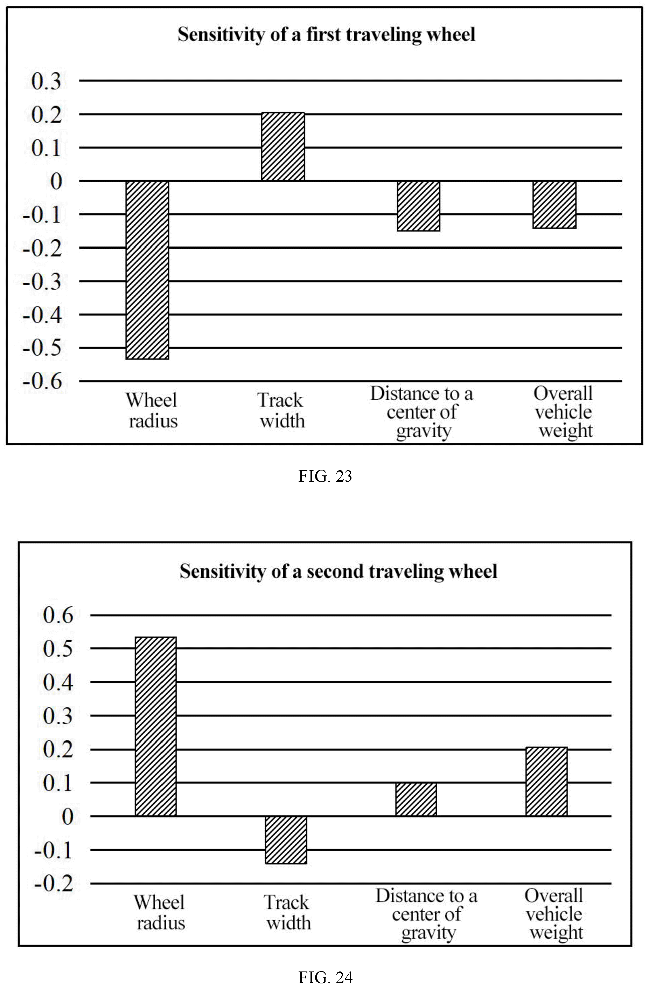

FIG. 23 is a graph showing sensitivity relationships between the maximum torque required to drive the first traveling wheel 411 under the second working condition and the wheel radius, the track width, the eccentric distance, and the overall vehicle weight. FIG. 24 is a graph showing sensitivity relationships between the maximum torque required to drive the second traveling wheel 412 under the second working condition and the wheel radius, the track width, the eccentric distance, and the overall vehicle weight. The sensitivity refers to the variation in the maximum torque caused by one unit of variation in the independent variable. The independent variable includes the wheel radius, the track width, the eccentric distance, and the overall vehicle weight. As can be seen from FIGS. 23 and 24, the wheel radius, the track width, the eccentric distance, and the overall vehicle weight all have an effect on the maximum torques. That is, under the second working condition, L1, R, L2, and the overall vehicle weight all affect the maximum torques required for the traveling motor 42 to drive the first traveling wheel 411 and the second traveling wheel 412 to travel. Moreover, L1 and R have a relatively great effect on the maximum torques required for the traveling motor 42 to drive the first traveling wheel 411 and the second traveling wheel 412 to travel, and L1 has the greatest effect on the maximum torques required for the traveling motor 42 to drive the first traveling wheel 411 and the second traveling wheel 412 to travel.

In summary, it can be found through analysis that under different working conditions, the distance L1 between the first traveling wheel 411 and the second traveling wheel 412 and the radius R of the first traveling wheel 411 each have a relatively great effect on the maximum torques required for the traveling motor 42 to drive the first traveling wheel 411 and the second traveling wheel 412 to travel.

In some examples, as shown in FIGS. 3 and 4, the ratio of the distance L1 between the first traveling wheel 411 and the second traveling wheel 412 to the radius R of the first traveling wheel 411 is greater than or equal to 6.5. In some examples, the ratio of the distance L1 between the first traveling wheel 411 and the second traveling wheel 412 to the radius R of the first traveling wheel 411 is greater than or equal to 7.

**Table one**

| | Conventional manned mower | Adjustment proportion of R | | | | | | | |
|---|---|---|---|---|---|---|---|---|---|
| | | -20% | -15% | -10% | -5% | 5% | 10% | 15% | 20% |
| R | 225 | 180 | 191.25 | 202.5 | 213.75 | 236.25 | 247.5 | 258.75 | 270 |
| L1 | 843 | 843 | 843 | 843 | 843 | 843 | 843 | 843 | 843 |
| L2 | 185 | 185 | 185 | 185 | 185 | 185 | 185 | 185 | 185 |
| Overall vehicle weight | 260 | 260 | 260 | 260 | 260 | 260 | 260 | 260 | 260 |
| Maximum torque required by the first traveling wheel | -37.42 | -15.15 | -19.7 | -24.9 | -30.79 | -44.18 | -53.01 | -62.06 | -71.99 |
| Maximum torque required by the second traveling wheel | 51.42 | 30.58 | 35.06 | 40.1 | 45.46 | 57.94 | 65.04 | 72.73 | 81.07 |

As shown in Table one, under the first working condition, a maximum torque of the first traveling wheel 411 and a maximum torque of the second traveling wheel 412 of the conventional manned mower are compared with maximum torques of the first traveling wheel 411 and maximum torques of the second traveling wheel 412 of the manned mower of the present application with a value of R that is adjusted in different proportions. It can be seen that under the first working condition, when the radius R of the first traveling wheel 411 is adjusted, the maximum torques required to drive the first traveling wheel 411 and the second traveling wheel 412 to travel at the same target wheel speeds each vary. In addition, when the radius R of the first traveling wheel 411 is reduced on the basis of that of the conventional manned mower, the maximum torques required to drive the first traveling wheel 411 and the second traveling wheel 412 to travel at the same target wheel speeds are reduced compared with those of the conventional manned mower.

**Table two**

| | Conventional manned mower | Adjustment proportion of R | | | | | | | |
|---|---|---|---|---|---|---|---|---|---|
| | | -20% | -15% | -10% | -5% | 5% | 10% | 15% | 20% |
| R | 225 | 180 | 191.25 | 202.5 | 213.75 | 236.25 | 247.5 | 258.75 | 270 |
| L1 | 843 | 843 | 843 | 843 | 843 | 843 | 843 | 843 | 843 |
| L2 | 185 | 185 | 185 | 185 | 185 | 185 | 185 | 185 | 185 |
| Overall vehicle weight | 260 | 260 | 260 | 260 | 260 | 260 | 260 | 260 | 260 |
| Maximum torque required by the | -114.7 | -62.74 | -73.73 | -86.01 | -99.64 | -131.3 | -149.5 | -169.3 | -190.9 |
| first traveling wheel | | | | | | | | | |
| Maximum torque required by the second traveling wheel | 23.95 | 16.53 | 18.19 | 19.98 | 21.9 | 26.13 | 28.46 | 30.95 | 33.59 |

As shown in Table two, under the second working condition, a maximum torque of the first traveling wheel 411 and a maximum torque of the second traveling wheel 412 of the conventional manned mower are compared with maximum torques of the first traveling wheel 411 and maximum torques of the second traveling wheel 412 of the manned mower of the present application with the value of R that is adjusted in different proportions. It can be seen that under the second working condition, when the radius R of the first traveling wheel 411 is adjusted, the maximum torques required to drive the first traveling wheel 411 and the second traveling wheel 412 to travel each vary. In addition, when the radius R of the first traveling wheel 411 is reduced on the basis of that of the conventional manned mower, the maximum torques required to drive the first traveling wheel 411 and the second traveling wheel 412 to travel at the same target wheel speeds are reduced compared with those of the conventional manned mower.

In summary, it can be seen that under different working conditions, when the radius R of the first traveling wheel 411 is reduced on the basis of that of the conventional manned mower, the maximum torques required to drive the first traveling wheel 411 and the second traveling wheel 412 to travel at the same target wheel speeds are each reduced. On this basis, as shown in FIGS. 3 and 4, in some examples, the radius R of the first traveling wheel 411 is less than or equal to 200 mm. In some examples, the radius R of the first traveling wheel 411 is less than or equal to 190 mm. In other examples, the radius R of the first traveling wheel 411 is less than or equal to 180 mm. In other examples, the radius R of the first traveling wheel 411 is less than or equal to any value between 180 mm and 200 mm, which is not specifically limited here. In this case, at the same target wheel speeds, the maximum torques required to drive the first traveling wheel 411 and the second traveling wheel 412 to travel are significantly lower than those of the conventional manned mower. The reduction of the torques can extend the battery lifetime, reduce the temperature rise, and improve the extreme working capabilities. Therefore, the manned mower is adaptable to the working conditions with the steeper gradients and has the better working capabilities under the extreme working conditions of slope slipping.

**Table three**

| | Conventional manned mower | Adjustment proportion of L1 | | | | | | | |
|---|---|---|---|---|---|---|---|---|---|
| | | -20% | -15% | -10% | -5% | 5% | 10% | 15% | 20% |
| L1 | 843 | 674.4 | 716.55 | 758.7 | 800.85 | 885.15 | 927.3 | 969.45 | 1011.6 |
| R | 225 | 225 | 225 | 225 | 225 | 225 | 225 | 225 | 225 |
| L2 | 185 | 185 | 185 | 185 | 185 | 185 | 185 | 185 | 185 |
| Overall vehicle weight | 260 | 260 | 260 | 260 | 260 | 260 | 260 | 260 | 260 |
| Maximum torque required by the first traveling wheel | -37.42 | -66.28 | -57.13 | -49.45 | -42.96 | -32.64 | -28.51 | -24.9 | -21.74 |
| Maximum torque required by the second traveling wheel | 51.42 | 72.05 | 65.5 | 60.02 | 55.38 | 48.02 | 45.06 | 42.48 | 40.22 |

As shown in Table three, under the first working condition, the maximum torque of the first traveling wheel 411 and the maximum torque of the second traveling wheel 412 of the conventional manned mower are compared with maximum torques of the first traveling wheel 411 and maximum torques of the second traveling wheel 412 of the manned mower of the present application with a value of L1 that is adjusted in different proportions. It can be seen that under the first working condition, when the distance L1 between the first traveling wheel 411 and the second traveling wheel 412 is adjusted, the maximum torques required to drive the first traveling wheel 411 and the second traveling wheel 412 to travel at the same target wheel speeds each vary. In addition, when the distance L1 between the first traveling wheel 411 and the second traveling wheel 412 is increased on the basis of that of the conventional manned mower, the maximum torques required to drive the first traveling wheel 411 and the second traveling wheel 412 to travel at the same target wheel speeds are reduced compared with those of the conventional manned mower.

**Table four**

| | Conventional manned mower | Adjustment proportion of L1 | | | | | | | |
|---|---|---|---|---|---|---|---|---|---|
| | | -20% | -15% | -10% | -5% | 5% | 10% | 15% | 20% |
| L1 | 843 | 674.4 | 716.55 | 758.7 | 800.85 | 885.15 | 927.3 | 969.45 | 1011.6 |
| R | 225 | 225 | 225 | 225 | 225 | 225 | 225 | 225 | 225 |
| L2 | 185 | 185 | 185 | 185 | 185 | 185 | 185 | 185 | 185 |
| Overall vehicle weight | 260 | 260 | 260 | 260 | 260 | 260 | 260 | 260 | 260 |
| Maximum torque required by the first traveling wheel | -114.7 | -171.4 | -153.4 | -138.4 | -125.6 | -105.3 | -97.22 | -90.14 | -83.92 |
| Maximum torque required by the second traveling wheel | 23.95 | 29.11 | 27.47 | 26.1 | 24.94 | 23.1 | 22.36 | 21.71 | 21.15 |

As shown in Table four, under the second working condition, the maximum torque of the first traveling wheel 411 and the maximum torque of the second traveling wheel 412 of the conventional manned mower are compared with maximum torques of the first traveling wheel 411 and maximum torques of the second traveling wheel 412 of the manned mower of the present application with the value of L1 that is adjusted in different proportions. It can be seen that under the second working condition, when the distance L1 between the first traveling wheel 411 and the second traveling wheel 412 is adjusted, the maximum torques required to drive the first traveling wheel 411 and the second traveling wheel 412 to travel at the same target wheel speeds each vary. In addition, when the distance L1 between the first traveling wheel 411 and the second traveling wheel 412 is increased on the basis of that of the conventional manned mower, the maximum torques required to drive the first traveling wheel 411 and the second traveling wheel 412 to travel at the same target wheel speeds are each reduced compared with those of the conventional manned mower.

In summary, it can be seen that under different working conditions, when the distance L1 between the first traveling wheel 411 and the second traveling wheel 412 is increased on the basis of that of the conventional manned mower, the maximum torques required to drive the first traveling wheel 411 and the second traveling wheel 412 to travel at the same target wheel speeds are each reduced. On this basis, in some examples, as shown in FIGS. 3 and 4, the distance L1 between the first traveling wheel 411 and the second traveling wheel 412 is greater than or equal to 1200 mm. In this case, at the same target wheel speeds, the maximum torques required to drive the first traveling wheel 411 and the second traveling wheel 412 to travel are significantly lower than those of the conventional manned mower. The reduction of the torques can extend the battery lifetime, reduce the temperature rise, and improve the extreme working capabilities. Therefore, the manned mower is adaptable to the working conditions with the steeper gradients and has the better working capabilities under the extreme working conditions of slope slipping.

In some examples, the distance L1 between the first traveling wheel 411 and the second traveling wheel 412 is greater than or equal to any value between 1200 mm and 1300 mm. In some other examples, the distance L1 between the first traveling wheel 411 and the second traveling wheel 412 is greater than or equal to 1220 mm. In some other examples, the distance L1 between the first traveling wheel 411 and the second traveling wheel 412 is greater than or equal to 1230 mm. In some other examples, the distance L1 between the first traveling wheel 411 and the second traveling wheel 412 is greater than or equal to 1240 mm. In some other examples, the distance L1 between the first traveling wheel 411 and the second traveling wheel 412 is greater than or equal to 1250 mm. In other examples, the distance L1 between the first traveling wheel 411 and the second traveling wheel 412 is greater than or equal to 1260 mm. In other examples, the distance L1 between the first traveling wheel 411 and the second traveling wheel 412 is greater than or equal to 1270 mm. In other examples, the distance L1 between the first traveling wheel 411 and the second traveling wheel 412 is greater than or equal to 1280 mm. In other examples, the distance L1 between the first traveling wheel 411 and the second traveling wheel 412 is greater than or equal to 1280 mm. In other examples, the distance L1 between the first traveling wheel 411 and the second traveling wheel 412 is greater than or equal to 1290 mm. In other examples, the distance L1 between the first traveling wheel 411 and the second traveling wheel 412 is greater than or equal to 1300 mm.

**Table five**

| | Conventional manned mower | Adjustment proportion of L2 | | | | | | |
|---|---|---|---|---|---|---|---|---|
| L2 | 185 | -20% | -15% | -10% | -5% | 5% | 10% | 15% |
| R | 225 | 148 | 157.25 | 166.5 | 175.75 | 194.25 | 203.5 | 212.75 |
| L2 | 843 | 225 | 225 | 225 | 225 | 225 | 225 | 225 |
| Overall vehicle weight | 260 | 843 | 843 | 843 | 843 | 843 | 843 | 843 |
| Maximum torque required by the first traveling wheel | -37.42 | 260 | 260 | 260 | 260 | 260 | 260 | 260 |
| Maximum torque required by the second traveling wheel | 51.42 | -20% | -15% | -10% | -5% | 5% | 10% | 15% |

As shown in Table five, under the first working condition, the maximum torque of the first traveling wheel 411 and the maximum torque of the second traveling wheel 412 of the conventional manned mower are compared with maximum torques of the first traveling wheel 411 and maximum torques of the second traveling wheel 412 of the manned mower of the present application with a value of L2 that is adjusted in different proportions. It can be seen that under the first working condition, when the distance L2 from the midpoint d of the line connecting the axis center of the first traveling wheel 411 and the axis center of the second traveling wheel 412 to the center of gravity G of the manned mower is adjusted, the maximum torques required to drive the first traveling wheel 411 and the second traveling wheel 412 to travel at the same target wheel speeds each vary. In addition, when the distance L2 from the midpoint d of the line connecting the axis center of the first traveling wheel 411 and the axis center of the second traveling wheel 412 to the center of gravity G of the manned mower is reduced on the basis of that of the conventional manned mower, the maximum torques required to drive the first traveling wheel 411 and the second traveling wheel 412 to travel at the same target wheel speeds are reduced compared with those of the conventional manned mower.

**Table six**

| | Conventional manned mower | Adjustment proportion of L2 | | | | | | | |
|---|---|---|---|---|---|---|---|---|---|
| | | -20% | -15% | -10% | -5% | 5% | 10% | 15% | 20% |
| L2 | 185 | 148 | 157.25 | 166.5 | 175.75 | 194.25 | 203.5 | 212.75 | 222 |
| R | 225 | 225 | 225 | 225 | 225 | 225 | 225 | 225 | 225 |
| L2 | 843 | 843 | 843 | 843 | 843 | 843 | 843 | 843 | 843 |
| Overall vehicle weight | 260 | 260 | 260 | 260 | 260 | 260 | 260 | 260 | 260 |
| Maximum torque required by the first traveling wheel | -114.7 | -94.55 | -99.59 | -104.6 | -109.7 | -119.8 | -124.8 | -129.8 | -134.9 |
| Maximum torque required by the second traveling wheel | 23.95 | 22.15 | 22.57 | 23.03 | 23.49 | 24.41 | 24.87 | 25.32 | 25.78 |

As shown in Table six, under the second working condition, the maximum torque of the first traveling wheel 411 and the maximum torque of the second traveling wheel 412 of the conventional manned mower are compared with maximum torques of the first traveling wheel 411 and maximum torques of the second traveling wheel 412 of the manned mower of the present application with the value of L2 that is adjusted in different proportions. It can be seen that under the second working condition, when the distance L2 from the midpoint d of the line connecting the axis center of the first traveling wheel 411 and the axis center of the second traveling wheel 412 to the center of gravity G of the manned mower is adjusted, the maximum torques required to drive the first traveling wheel 411 and the second traveling wheel 412 to travel each vary. In addition, when the distance L2 from the midpoint d of the line connecting the axis center of the first traveling wheel 411 and the axis center of the second traveling wheel 412 to the center of gravity G of the manned mower is reduced on the basis of that of the conventional manned mower, the maximum torques required to drive the first traveling wheel 411 and the second traveling wheel 412 to travel at the same target wheel speeds are reduced compared with those of the conventional manned mower.

In summary, it can be seen that under different working conditions, when the distance L2 from the midpoint d of the line connecting the axis center of the first traveling wheel 411 and the axis center of the second traveling wheel 412 to the center of gravity G of the manned mower is reduced on the basis of that of the conventional manned mower, the maximum torques required to drive the first traveling wheel 411 and the second traveling wheel 412 to travel are reduced. On this basis, in some examples, as shown in FIGS. 3 and 4, the distance L2 from the midpoint d of the line connecting the axis center of the first traveling wheel 411 and the axis center of the second traveling wheel 412 to the center of gravity G of the manned mower is less than or equal to 200 mm. In this case, at the same target wheel speeds, the maximum torques required to drive the first traveling wheel 411 and the second traveling wheel 412 to travel are significantly lower than those of the conventional manned mower. The reduction of the torques can extend the battery lifetime, reduce the temperature rise, and improve the extreme working capabilities. Therefore, the manned mower is adaptable to the working conditions with the steeper gradients and has the better working capabilities under the extreme working conditions of slope slipping.

**Table seven**

| Gradient | Maximum torque (N·m) of the first traveling wheel of the conventional manned mower (L1 = 843 mm, R = 225 mm, and L2 = 185 mm) | Maximum torque (N·m) of the first traveling wheel of the manned mower in the present application (L1 = 1200 mm, R = 200 mm, and L2 = 200 mm) |
|---|---|---|
| 10° | 75 | 48 |
| 15° | 88 | 55 |
| 20° | 101 | 61 |

As shown in Table seven, maximum torques required to drive the first traveling wheel 411 of the conventional manned mower are compared with maximum torques required to drive the first traveling wheel 411 of the manned mower when the manned mower satisfies the following conditions: L1 = 1200 mm, R = 200 mm, and L2 = 200 mm. It can be seen that in the conventional manned mower, when the gradient is greater than or equal to 10° and less than or equal to 20°, the maximum torques required to drive the first traveling wheel 411 are each greater than 70 N·m. When the manned mower proposed in the present application satisfies the following conditions: L1 = 1200 mm, R = 200 mm, and L2 = 200 mm, and the gradient is greater than or equal to 10° and less than or equal to 20°, at the same target wheel speed, the maximum torques required to drive the first traveling wheel 411 to travel are each less than 70 N·m. Therefore, the manned mower is adaptable to the working conditions with the steeper gradients and has the better working capabilities under the extreme working conditions of slope slipping.

In some examples, during travel on a slope with a gradient of greater than or equal to 10° and less than or equal to 20°, at the same target wheel speed, the maximum torque required to drive the first traveling wheel 411 and/or the second traveling wheel 412 to travel is less than or equal to 70 N·m. Preferably, during the travel on the slope with the gradient of greater than or equal to 10° and less than or equal to 20°, at the same target wheel speed, the maximum torque required to drive the first traveling wheel 411 and/or the second traveling wheel 412 to travel is less than or equal to 68 N·m. Preferably, during the travel on the slope with the gradient of greater than or equal to 10° and less than or equal to 20°, at the same target wheel speed, the maximum torque required to drive the first traveling wheel 411 and/or the second traveling wheel 412 to travel is less than or equal to 65 N·m. Therefore, the manned mower is adaptable to the working conditions with the steeper gradients and has better working capabilities under working conditions of slopes.

The present application has the following benefits. Through analysis, it is found that the distance L1 between the first traveling wheel and the second traveling wheel and the radius R of the first traveling wheel each have an effect on the maximum torques required for the traveling motor to drive the first traveling wheel and the second traveling wheel to travel. The ratio of the distance L1 between the first traveling wheel and the second traveling wheel to the radius R of the first traveling wheel is greater than or equal to 6. In this case, the maximum torques required for the traveling motor to drive the first traveling wheel and the second traveling wheel are significantly reduced. The reduction of the torques can improve extreme working capabilities related to endurance and temperature rise. Therefore, the manned mower is adaptable to the working conditions with the steeper gradients and has the better working capabilities under the working conditions of slopes. The present application provides the manned mower with the capability to work on slopes. This manned mower requires a lower torque from an electric motor during turning work and slope work, experiences slower temperature rise, and has stronger endurance.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A manned mower, comprising:
a frame;
a traveling wheel set mounted to the frame, wherein the traveling wheel set comprises at least rear traveling wheels, and the rear traveling wheels comprise a first traveling wheel and a second traveling wheel;
a traveling motor having a drive shaft and configured to drive the traveling wheel set;
a mowing element driven by a mowing motor; and
a power supply assembly, wherein the power supply assembly comprises at least one battery pack and is configured to power the traveling motor and/or the mowing motor;
wherein a ratio of a distance L1 between the first traveling wheel and the second traveling wheel to a radius R of the first traveling wheel is greater than or equal to 6.

2. The manned mower according to claim 1, wherein the distance L1 between the first traveling wheel and the second traveling wheel is greater than or equal to 1200 mm.

3. The manned mower according to claim 2, wherein the distance L1 between the first traveling wheel and the second traveling wheel is greater than or equal to 1250 mm.

4. The manned mower according to claim 1, wherein each of the radius R of the first traveling wheel and a radius R of the second traveling wheel is less than or equal to 200 mm.

5. The manned mower according to claim 1, wherein each of the radius R of the first traveling wheel and a radius R of the second traveling wheel is less than or equal to 180 mm.

6. The manned mower according to claim 1, wherein a total energy of the power supply assembly is greater than or equal to 2 kW·h and less than or equal to 10 kW·h.

7. The manned mower according to claim 1, wherein a distance L2 from a midpoint of a line connecting an axis center of the first traveling wheel and an axis center of the second traveling wheel to a center of gravity of the manned mower is less than or equal to 200 mm.

8. The manned mower according to claim 1, wherein during travel on a slope with a gradient of greater than or equal to 10° and less than or equal to 20°, a maximum torque required for the first traveling wheel and/or the second traveling wheel to travel is less than or equal to 70 N·m.

9. The manned mower according to claim 1, wherein the at least one battery pack is detachably mounted on the frame.

10. The manned mower according to claim 1, wherein the traveling motor comprises at least a first traveling motor and a second traveling motor, the first traveling motor is configured to drive the first traveling wheel, and the second traveling motor is configured to drive the second traveling wheel.

11. The manned mower according to claim 1, wherein the manned mower is a riding mower or a stand-on mower.

12. The manned mower according to claim 1, wherein an energy of the at least one battery pack of the power supply assembly is greater than or equal to 100 W·h and less than or equal to 2 kW-h.

13. A manned mower, comprising:
a frame;
a traveling wheel set mounted to the frame, wherein the traveling wheel set comprises at least rear traveling wheels, and the rear traveling wheels comprise a first traveling wheel and a second traveling wheel;
a traveling motor having a drive shaft and configured to drive the traveling wheel set;
a mowing element driven by a mowing motor; and
a power supply assembly, wherein the power supply assembly comprises at least one battery pack and is configured to power the traveling motor and/or the mowing motor;
wherein a distance L1 between the first traveling wheel and the second traveling wheel is greater than or equal to 1200 mm.

14. The manned mower according to claim 13, wherein the distance L1 between the first traveling wheel and the second traveling wheel is greater than or equal to 1250 mm.

15. The manned mower according to claim 13, wherein each of a radius R of the first traveling wheel and a radius R of the second traveling wheel is less than or equal to 200 mm.

16. An outdoor traveling device, comprising:
a frame;
a traveling wheel set mounted to the frame, wherein the traveling wheel set comprises at least rear traveling wheels, and the rear traveling wheels comprise a first traveling wheel and a second traveling wheel;
a traveling motor having a drive shaft and configured to drive the traveling wheel set;
a mowing element driven by a mowing motor; and
a power supply assembly, wherein the power supply assembly comprises at least one battery pack and is configured to power the traveling motor and/or the mowing motor;
wherein a ratio of a distance L1 between the first traveling wheel and the second traveling wheel to a radius R of the first traveling wheel is greater than or equal to 6.

17. The outdoor traveling device according to claim 16, wherein the outdoor traveling device is a manned snow thrower, a manned mower, or an all-terrain vehicle.
